# EUROPÄISCHE PATENTANMELDUNG

(11) **EP 1 991 000 A1**
(43) Veröffentlichungstag der Anmeldung: **12.11.2008**
(21) Anmeldenummer: 07009252.3
(22) Anmeldetag: 08.05.2007
(51) Int. Cl.: H04N 7/173

(54) **Datenverarbeitungsgerät, insbesondere Settop-Box, zum Anschluss an ein Empfangsgerät, Eingabevorrichtung zur Steuerung eines Datenverarbeitungsgeräts und Verfahren zum Betreiben eines Datenverarbeitungsgeräts**

(71) Anmelder: SIEMENS AKTIENGESELLSCHAFT, 80333 München (DE)
(72) Erfinder: Glufke, Jens, 85614 Englharting (DE)

(57) **Zusammenfassung**

Es wird ein Datenverarbeitungsgerät, insbesondere eine Set-top-Box, und ein Verfahren zum Betreiben des Datenverarbeitungsgeräts (16) beschrieben. Das Datenverarbeitungsgerät (16) ist zum Anschluss an ein Empfangsgerät (15) und ein Kommunikationsnetzwerk vorgesehen. Das Datenverarbeitungsgerät (16) ist dazu ausgebildet, von dem Kommunikationsnetzwerk ausgesendete Daten, umfassend Inhaltsdaten (2) sowie zumindest ein Identifikationsdatum (3), zu empfangen und zu verarbeiten und die verarbeiteten Daten an das Empfangsgerät (15) zur Ausgabe zu übertragen. Das Datenverarbeitungsgerät (16) ist weiter dazu ausgebildet, einen von einer Eingabevorrichtung des Datenverarbeitungsgeräts und/oder des Empfangsgeräts (15) ausgesendeten Code, der einem bestimmten Identifikationsdatum (3) der Identifikationsdaten zugeordnet ist, zu empfangen und zu verarbeiten. In Reaktion auf den Erhalt des Codes wird eine Kommunikationsverbindung zwischen dem Datenverarbeitungsgerät (16) bzw. einem Kommunikationsendgerät (19) und einer Einrichtung des Kommunikationsnetzwerks hergestellt, welcher das bestimmte Identifikationsdatum (3) zugeordnet ist.

## Beschreibung

Die Erfindung betrifft ein Datenverarbeitungsgerät, insbesondere eine Settop-Box, zum Anschluss an ein Empfangsgerät und an ein Kommunikationsnetzwerk. Die Erfindung betrifft ferner eine Eingabevorrichtung, insbesondere eine Fernbedienung, zur Steuerung des Datenverarbeitungsgeräts. Die Erfindung betrifft weiterhin ein Verfahren zum Betreiben des Datenverarbeitungsgeräts sowie ein Verfahren zum Bereitstellen eines Interaktionskanals in einer Fernsehsendung.

Gegenwärtig wird eine Vielzahl von Fernsehsendungen ausgestrahlt, bei welchen es notwendig oder möglich ist, dass die Zuschauer der Fernsehsendung unter Verwendung eines Kommunikationsendgeräts, z.B. eines Telefons, in Kontakt mit dem Anbieter oder Produzenten des Fernsehprogramms treten. Die Kontaktaufnahme erfolgt, um z.B. eine Ware, welche in der Sen= dung angeboten wird, zu erwerben. Die Kontaktaufnahme kann auch dazu dienen, eine Stimme in einer Abstimmung der Fernsehsendung abzugeben. Populär sind auch Sendungen, in denen die Zuschauer an einer Verlosung oder an einem Rätsel teilnehmen können.

Um die Kontaktaufnahme zu dem Programmanbieter oder dem Produzenten der Sendung zu ermöglichen, werden gegenwärtig eine oder mehrere Telefonnummern in das Fernsehbild eingeblendet. Das durch ein Empfangsgerät dargestellte Fernsehbild visualisiert die Telefonnummer oder Telefonnummern, wodurch dem Zuschauer es ermöglicht wird, die oder eine der eingeblendeten Telefonnummern unter Verwendung seines Kommunikationsendgerätes zu wählen. Hierdurch wird dann eine Kommunikationsverbindung zu dem Programmanbieter oder -produzenten hergestellt. Mit dem Aufbau der Kommunikationsverbindung kann der Zuschauer dann eine in dem Fernsehprogramm angebotene Ware erwerben oder an der Abstimmung oder dem Rätsel teilnehmen.

Es ist Aufgabe der vorliegenden Erfindung, eine Möglichkeit bereitzustellen, mit welcher die Teilnahme an derartigen Fernsehsendungen für Zuschauer vereinfacht wird. Es ist insbesondere Aufgabe der vorliegenden Erfindung, ein Datenverarbeitungsgerät, insbesondere eine Settop-Box, anzugeben, welche die Kontaktaufnahme durch den Aufbau einer Kommunikationsverbindung mit einem Programmanbieter oder Programmproduzenten für einen Zuschauer erleichtert. Es soll ferner eine Eingabevorrichtung angegeben werden, die die Kontaktaufnahme durch den Aufbau einer Kommunikationsverbindung unterstützt. Eine weitere Aufgabe ist es, ein Verfahren zu betreiben, ein Datenverarbeitungsgerät, insbesondere eine Settop-Box, anzugeben, welches die Kontaktaufnahme durch den Aufbau einer Kommunikationsverbindung zu dem Programmproduzenten oder - anbieter erleichtert. Schließlich soll ein Verfahren angegeben werden, welches das Bereitstellen eines Interaktionskanals in einer Fernsehsendung ermöglicht.

Diese Aufgaben werden durch die Merkmale der unabhängigen Ansprüche gelöst. Vorteilhafte Ausführungsformen finden sich jeweils in den abhängigen Ansprüchen.

Ein erfindungsgemäßes Datenverarbeitungsgerät, insbesondere eine Settop-Box, ist zum Anschluss an ein Empfangsgerät, wie z.B. ein Fernsehgerät, und ein Kommunikationsnetzwerk vorgesehen. Das Datenverarbeitungsgerät ist dazu ausgebildet, von dem Kommunikationsnetzwerk ausgesendete Daten, umfassend Inhaltsdaten sowie zumindest ein Identifikationsdatum, zu empfangen und zu verarbeiten und die verarbeiteten Daten an das Empfangsgerät zur Ausgabe zu übertragen. Das Kommunikationsnetzwerk basiert beispielsweise auf dem Internetprotokoll und ermöglicht nicht nur die Übertragung von Inhaltsdaten an das Empfangsgerät, sondern auch von durch das Datenverarbeitungsgerät auswertbare Daten, nämlich das zumindest eine Identifikationsdatum. Ferner erlaubt die Verwendung des Internet Protokolls auch, Daten an das Kommunikationsnetzwerk zurück zu senden. Die Inhaltsdaten sind bevorzugt wahrnehmbarer, visueller Natur und werden auf dem Empfangsgerät sichtbar dargestellt. Das zumindest eine Identifikationsdatum kann beispielsweise eine Telefonnummer oder eine andere Kontaktadresse darstellen, wobei das zumindest eine Identifikationsdatum den Inhaltsdaten sichtbar überlagert ist. Das Datenverarbeitungsgerät ist weiter dazu ausgebildet, einen von einer Eingabevorrichtung des Datenverarbeitungsgeräts und/oder des Empfangsgeräts ausgesendeten Code, der einem bestimmten Identifikationsdatum der Identifikationsdaten zugeordnet ist, zu empfangen und zu verarbeiten. Das erfindungsgemäße Datenverarbeitungsgerät ist dazu ausgebildet, in Reaktion auf den Erhalt des Codes eine Kommunikationsverbindung zwischen dem Datenverarbeitungsgerät bzw. einem Kommunikationsendgerät und einer Einrichtung des Kommunikationsnetzwerks herzustellen, welcher das bestimmte Identifikationsdatum zugeordnet ist.

Eine erfindungsgemäße Eingabevorrichtung, insbesondere eine Fernbedienung, umfasst zur Steuerung des Datenverarbeitungsgeräts zumindest ein Eingabemittel, wobei die Eingabevorrichtung dazu ausgebildet ist, eine Betätigung des zumindest einen Eingabemittels zu überwachen und in Reaktion auf die Betätigung eines der Eingabemittel einen dem betreffenden Eingabemittel zugeordneten eindeutigen Code auszusenden, wodurch der Aufbau einer Kommunikationsverbindung zu einer Einrichtung eines Kommunikationsnetzwerks veranlasst wird, welcher ein dem Code zugeordnetes Identifikationsdatum zugeordnet ist.

Ein erfindungsgemäßes Verfahren zum Betreiben eines Datenverarbeitungsgeräts, insbesondere einer Settop-Box, welche an ein Kommunikationsnetzwerk und ein Empfangsgerät angeschlossen ist, umfasst die folgenden Schritte: von einem Kommunikationsnetzwerk ausgesendete Daten, umfassend Inhaltsdaten sowie zumindest ein Identifikationsdatum, werden empfangen und verarbeitet; die verarbeiteten Daten werden an das Empfangsgerät zur Ausgabe übertragen; wenn ein von einer Eingabevorrichtung des Datenverarbeitungsgeräts und/oder des Empfangsgeräts ausgesendeter Code, der einem bestimmten Identifikationsdatum der Identifikationsdaten zugeordnet ist, empfangen wird, werden diese Daten verarbeitet und es wird in Reaktion auf den Erhalt des Codes eine Kommunikationsverbindung zwischen dem Datenverarbeitungsgerät bzw. einem Kommunikationsendgerät und einer Einrichtung des Kommunikationsnetzwerks hergestellt, welchem das Identifikationsdatum zugeordnet ist.

Ein erfindungsgemäßes Verfahren zum Bereitstellen eines Interaktionskanals in einer Fernsehsendung umfasst die folgenden Schritte: Bereitstellen von Daten für die Ausgabe auf einem Empfangsgerät, wobei die Daten neben Inhaltsdaten zumindest ein Identifikationsdatum und eine jeweilige, dem zumindest einen Identifikationsdatum zugeordnete Auswahlinformation umfasst; Übertragen der Daten an ein Datenverarbeitungsgerät zur Verarbeitung und Weiterleitung an das Empfangsgerät, welches an das Datenverarbeitungsgerät angeschlossen ist; Übertragen des zumindest einen Identifikationsdatum und der jeweiligen, dem Identifikationsdatum zugeordneten Auswahlinformation an ein Kommunikationsmittel eines Kommunikationsnetzwerks; Herstellen einer Kommunikationsverbindung, wenn das Kommunikationsmittel eine von dem Datenverarbeitungsgerät ausgesendete Nachricht empfängt, aus welcher sich ein bestimmtes der Identifikationsdaten ermitteln lässt, wobei die Kommunikationsverbindung zwischen einer Einrichtung, welcher das bestimmte Identifikationsdatum zugeordnet ist, und einem Kommunikationsendgerät eines Zuschauers hergestellt wird.

Durch die Erfindung wird einem Zuschauer einer Fernsehsendung die Möglichkeit gegeben, durch eine einfache Betätigung eines Eingabemittels einer Eingabevorrichtung des Datenverarbeitungsgeräts oder des mit dem Datenverarbeitungsgerät verbundenen Empfangsgeräts eine Kommunikationsverbindung zu einer Einrichtung herzustellen, welcher das in den Daten enthaltene Identifikationsdatum zugeordnet ist. Der Zuschauer wird dadurch vorteilhafterweise von der verhältnismäßig umständlichen Vorgehensweise entbunden, ein auf dem Empfangsgerät dargestelltes Identifikationsdatum unter Verwendung eines weiteren Kommunikationsendgeräts manuell einzugeben.

Dabei weist die Erfindung weiterhin den Vorteil auf, das bestehende Verfahren der einfachen Einblendung von Identifikationsdaten in die Daten des Fernsehprogramms weiterhin möglich ist, welche die Daten nicht über ein Datenverarbeitungsgerät empfangen, welches über einen Rückkanal verfügt, wie z.B. das Fernsehen über das Internetprotokoll (IPTV).

Gemäß einer Ausbildungsform ist das erfindungsgemäße Datenverarbeitungsgerät weiter dazu ausgebildet, aus den von dem Kommunikationsnetzwerk ausgesendeten Daten das zumindest eine Identifikationsdatum und jeweils eine einem Eingabemittel der Eingabevorrichtung entsprechende und einem Identifikationsdatum zugeordnete Auswahlinformation zu ermitteln, wobei das Datenverarbeitungsgerät aus den Auswahlinformationen einen jeweiligen den Identifikationsdaten zugeordneten Code ermitteln kann. Die Auswahlinformationen sind visueller Natur, die z.B. Teil der Inhaltsdaten sind oder den Inhaltsdaten überlagert, auf dem Endgerät dargestellt, sind. Die Auswahlinformation kann eine dem zumindest einen Identifikationsdatum zugeordnete Farb- oder Tasteninformation der Eingabevorrichtung darstellen. Hierdurch ist für den Zuschauer erkennbar, dass zur Kontaktaufnahme mit der Einrichtung des Kommunikationsnetzwerks, welcher das bestimmte Identifikationsdatum zugeordnet ist, z.B. lediglich eine der Auswahlinformation zugeordnete Taste (Eingabemittel) betätigt werden muss.

Gemäß einer Weiterbildung werden das zumindest eine Identifikationsdatum und die zugeordnete Auswahlinformation zur Ausgabe an das Empfangsgerät übertragen.

In einer anderen Weiterbildung ist der Code dem Eingabemittel der Eingabevorrichtung zugeordnet und wird durch diese bei Betätigung des Eingabemittels ausgesendet.

Um die Herstellung einer Kommunikationsverbindung zwischen dem Datenverarbeitungsgerät bzw. einem Kommunikationsendgerät (des Zuschauers) und der Einrichtung des Kommunikationsnetzwerks herzustellen, welcher das bestimmte Identifikationsdatum zugeordnet ist, speichert das Datenverarbeitungsgerät das Identifikationsdatum und den dem Identifikationsdatum zugeordneten Code.

Gemäß einer Weiterbildung weist das Datenverarbeitungsgerät eine Kommunikationsvorrichtung auf, mittels welcher direkt eine Kommunikationsverbindung mit der Einrichtung des Kommunikationsnetzwerks herstellbar ist. Die Kommunikationsvorrichtung kann hierbei in Form von Hardware oder auch Software ausgebildet sein.

Alternativ ist das Datenverarbeitungsgerät zur Herstellung einer Verbindung mit der Einrichtung des Kommunikationsnetzwerks dazu ausgebildet, an ein Kommunikationsmittel des Kommunikationsnetzwerks eine Nachricht zu übertragen, welche umfasst: einen Kennzeichner des Datenverarbeitungsgeräts; eine Information über die an das Empfangsgerät übertragenen Daten; eine Information über die Auswahlinformation oder das Identifikationsdatum, welches der Auswahlinformation zugeordnet ist, so dass das Kommunikationsmittel des Kommunikationsnetzwerks eine Kommunikationsverbindung mit der Einrichtung des Kommunikationsnetzwerks herstellen kann. Bei dieser Variante stellt das Datenverarbeitungsgerät einem Kommunikationsmittel des Kommunikationsnetzwerks Informationen zur Verfügung, anhand denen das Kommunikationsmittel die Kommunikationsverbindung herstellen kann und eine Zuordnung zu dem Datenverarbeitungsgerät möglich ist. Dies ist beispielsweise bei der Teilnahme an einem Voting oder einem Rätsel notwendig. Ferner ist die Zuordnung im Fall der Vergebührung des Aufbaus der Kommunikationsverbindung relevant.

Das Datenverarbeitungsgerät ist zum Empfang von auf dem Internetprotokoll basierenden Daten ausgebildet.

Gemäß einer weiteren Ausführungsform wird durch das Datenverarbeitungsgerät eine Kommunikationsverbindung zu der Einrichtung des Kommunikationsnetzwerks nur dann aufgebaut, wenn der Code empfangen wird, so lange die von dem Kommunikationsnetzwerk ausgesendeten und von dem Datenverarbeitungsgerät erhaltenen Daten, umfassend das zumindest eine Identifikationsdatum und die jeweils zugeordnete Auswahlinformation, an das Empfangsgerät übertragen werden. Hierdurch soll sichergestellt werden, dass der Aufbau einer Kommunikationsverbindung lediglich zum Zeitpunkt der Ausstrahlung der Fernsehsendung möglich ist. Es wird ein inhaltlicher Zusammenhang zwischen dem Aufbau der Kommunikationsverbindung und der Ausstrahlung der Fernsehsendung hergestellt.

In einer Ausgestaltung des erfindungsgemäßen Verfahrens zum Betreiben des Datenverarbeitungsgeräts werden durch das Datenverarbeitungsgerät aus den von dem Kommunikationsnetzwerk ausgesendeten Daten das zumindest eine Identifikationsdatum und jeweils eine einem Eingabemittel der Eingabevorrichtung entsprechende und einem Identifikationsdatum zugeordnete Auswahlinformation ermittelt. Die Auswahlinformation ist, wie bereits vorher erklärt, visueller Natur, die z.B. Teil der Inhaltsdaten sind oder den Inhaltsdaten überlagert werden. Anhand der Auswahlinformationen wird dem Zuschauer ermöglicht, ein Eingabemittel der Eingabevorrichtung zu betätigen, welches einem bestimmten Identifikationsdatum der Identifikationsdaten entspricht.

Gemäß einer weiteren Ausgestaltung ermittelt das Datenverarbeitungsgerät aus den Auswahlinformationen einen jeweiligen den Identifikationsdaten zugeordneten Code.

Gemäß einer weiteren Ausgestaltung des erfindungsgemäßen Verfahrens werden das zumindest eine Identifikationsdatum und die jeweils zugeordneten Auswahlinformationen in dem Datenverarbeitungsgerät gespeichert. Hierdurch kann durch das Datenverarbeitungsgerät beim Empfang des von der Eingabevorrichtung ausgesendeten Codes, welcher einem Identifikationsdatum zugeordnet ist, anhand der Auswahlinformation das betreffende Identifikationsdatum ermittelt und eine Kommunikationsverbindung aufgebaut werden.

Gemäß einer weiteren Ausgestaltung des Verfahrens stellt das Datenverarbeitungsgerät direkt eine Kommunikationsverbindung mit der Einrichtung des Kommunikationsnetzwerks her.

Gemäß einer anderen Ausgestaltung des erfindungsgemäßen Verfahrens wird ein Kennzeichner des Datenverarbeitungsgeräts, eine Information über die an das Empfangsgerät übertragenen Daten (z.B. zur Identifikation des gerade angezeigten Programms) sowie eine Information über die Auswahlinformation oder das Identifikationsdatum, welcher die Auswahlinformation zugeordnet ist, übertragen, so dass das Kommunikationsmittel des Kommunikationsnetzwerks eine Kommunikationsverbindung mit der Einrichtung des Kommunikationsnetzwerks herstellen kann.

Gemäß einer weiteren Ausbildung werden die Daten von dem Kommunikationsnetzwerk an das Datenverarbeitungsgerät gemäß dem Internet Protokoll übertragen.

Die Erfindung wird nachfolgend näher anhand der Figuren erläutert. Es zeigen:
- Fig. 1: eine beispielhafte Darstellung einer Einblendung von Telefonnummern in einer Fernsehsendung, wobei den Telefonnummern jeweils eine Auswahlinformation für eine Eingabevorrichtung zugeordnet ist, und
- Fig. 2: eine schematische Darstellung, anhand der der Ablauf des erfindungsgemäßen Verfahrens verdeutlicht wird.

Im Rahmen der nachfolgenden Beschreibung werden die folgenden Begriffe verwendet, deren Definition jeweils wie folgt ist:
- IPTV: Fernsehen über das Internetprotokoll.
- IPTV-Provider: Anbieter für Fernsehen über das Internetprotokoll.
- Programmprovider: eine Einrichtung, die an einen IPTV-Provider Fernsehsendungen liefert.
- Settop-Box: Empfängerhardware, welche den Empfang von IPTV ermöglicht und mit einem Empfangsgerät des Zuschauers verbunden wird. Die Settop-Box enthält eine dafür geeignete Software, welche vom IPTV-Provider bereitgestellt wird.
- Backend: Computer- und Software-Infrastruktur, welche durch den IPTV-Provider bereitgestellt wird.
- IPTV-Middleware: Software, die im IPTV-Provider-Backend läuft und welche die Verwaltung der IPTV-Funktionalität übernimmt.

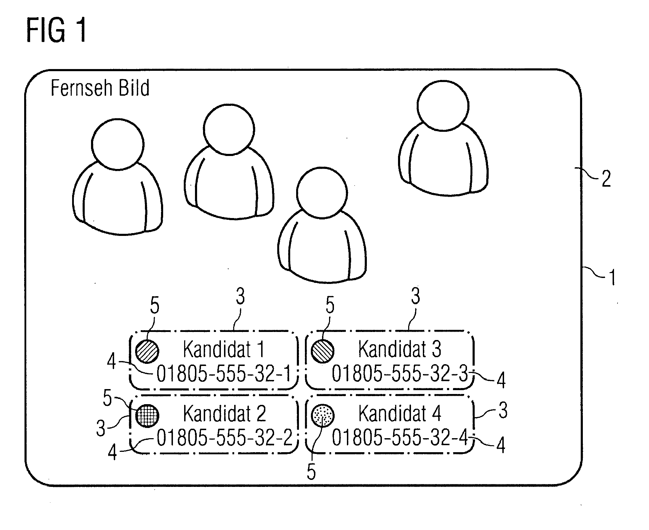

In Fig. 1 ist ein Fernsehbild 1 dargestellt, welches auf einem Empfangs- und Wiedergabegerät, z.B. einem Fernseher, wiedergegeben wird. In dem Fernsehbild 1 sind Inhaltsdaten 2, symbolisiert durch vier Personen bzw. Kandidaten, visualisiert, die im vorliegenden Ausführungsbeispiel um Identifikationsdaten von vier Kandidaten ergänzt sind. Die Identifikationsdaten 3 umfassen jeweils für jeden Kandidaten eine eigene Telefonnummer 4. Ein Zuschauer, der die auf dem Empfangsgerät wiedergegebene Sendung anschaut, soll im Ausführungsbeispiel für einen der vier Kandidaten stimmen. Das Abstimmen erfolgt unter Zuhilfenahme der Anwahl der in dem Fernsehbild eingeblendeten, z.B. gebührenpflichtigen, Telefonnummern 4. Als zusätzliche Information sind Farbcodierungen 5 von nachfolgend als Tasten bezeichneten Eingabemitteln einer Eingabevorrichtung in Form einer Fernbedienung eines Datenverarbeitungsgeräts angegeben. Die Farbcodierungen sind Teil jeweiliger Identifikationsdaten 3. Das Datenverarbeitungsgerät stellt eine Settop-Box dar, welche einerseits an das Empfangsgerät und andererseits an ein nach dem Internet Protokoll arbeitenden Kommunikationsnetzwerk angeschlossen ist, um die über das Kommunikationsnetzwerk ausgesendeten Daten zu verarbeiten und in ein für das Empfangsgerät verständliches Datenformat zu wandeln.

Die in dem Fernsehbild dargestellten Farbcodierungen 5, welche einer jeweiligen Telefonnummer 4 zugeordnet sind, entsprechen damit Tasten auf der Fernbedienung der IPTV-Settop-Box oder des mit der IPTV-Settop-Box verbundenen Empfangsgeräts. Anstatt der Verwendung von Farbtasten können natürlich auch beliebige andere Tasten der Fernbedienung einer jeweiligen Telefonnummer zugewiesen werden. Der Gebrauch von Farbtasten ist bei der Benutzerführung im Allgemeinen üblich und dadurch für einen Zuschauer und Bediener leicht verständlich.

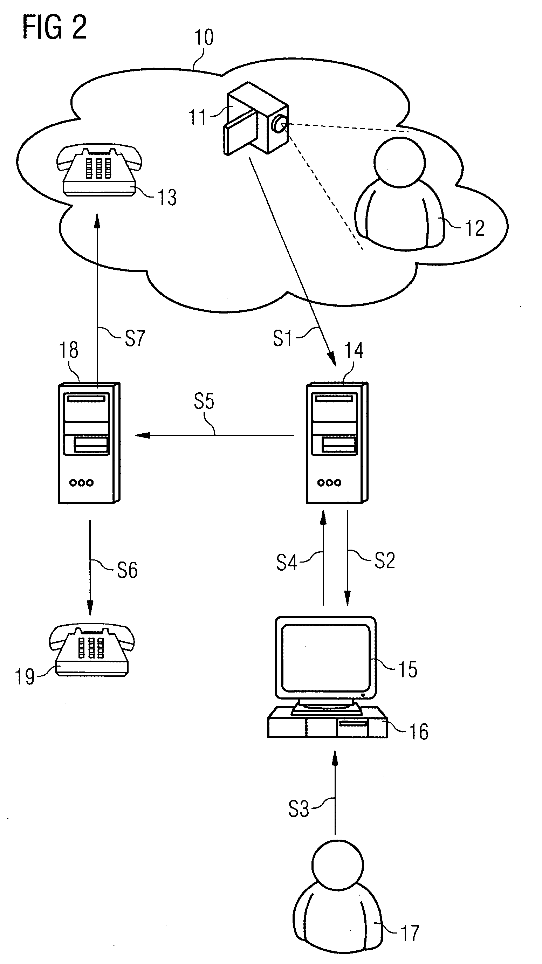

Anhand der Fig. 2 wird der Ablauf zum Aufbau einer Kommunikationsverbindung zwischen dem Zuschauer und einer Einrichtung des Programmanbieters ersichtlich. Mit dem Bezugszeichen 10 ist eine Fernsehproduktion gekennzeichnet, bei welcher unter Verwendung einer Kamera 11 ein Fernsehbild aufgezeichnet wird, das im Ausführungsbeispiel durch eine mit dem Bezugszeichen 12 gekennzeichnete Person symbolisiert ist. Während der Produktion der Fernsehsendung werden Telefonnummern mit einer Tastaturcodierung, wie in Fig. 1 gezeigt, eingeblendet. Diese Einblendung kann direkt in das an ein Empfangsgerät der Zuschauer übermittelte Fernsehbild erfolgen, so dass auch solche Zuschauer, die das Programm nicht über das Internetprotokoll empfangen, die gewünschten Telefonnummern anwählen können. Als zusätzliche Information werden im Rahmen der Übertragung bzw. Aussendung des Fernsehprogramms (Schritt S1) an einen Rechner 14, der auch als IPTV-Middleware bezeichnet wird, die Telefonnummern und die zugeordneten Tasten der Fernbedienung der Settop-Box übertragen. Diese Übertragung kann z.B. mittels eines vor der IPTV-Middleware implementierten Webservices erfolgen.

In einem Schritt S2 wird die Fernsehsendung per Internet Protokoll an den Zuschauer übertragen. Neben der Fernsehbildinformation werden zusätzlich die Telefonnummern und die zugeordneten Tasten der Fernbedienung an die IPTV-Settop-Box (Bezugszeichen 16) übertragen, welche mit dem Empfangsgerät 15 verbunden ist. Die Software der IPTV-Settop-Box kann nach Erhalt der genannten Informationen die Tasten der Fernbedienung einer Telefonnummer zuordnen.

Ein Zuschauer 17 verfolgt das Programm und möchte z.B. eine der eingeblendeten Telefonnummern wählen bzw. für eine der in dem Fernsehprogramm der gezeigten Optionen votieren. Zu diesem Zweck betätigt er auf der Fernbedienung der IPTV-Settop-Box eine der im Fernsehbild symbolisierten Tasten, z.B. eine der farblich codierten Tasten rot, grün, gelb oder blau.

Im Ausführungsbeispiel wird davon ausgegangen, dass die Settop-Box 16 des Zuschauers keine eigene Kommunikationsvorrichtung aufweist, mit welcher direkt eine Kommunikationsverbindung mit einem Kommunikationsgerät 13, z.B. einem Telefonserver, der Fernsehproduktion 10 herstellbar ist. Eine Kommunikationsverbindung wird daher über die IPTV-Middleware 14 des IPTV-Providers hergestellt. Mit dem Drücken einer der farblich codierten Tasten der Fernbedienung sendet die IPTV-Settop-Box 16 eine Nachricht an die IPTV-Middleware 14 des IPTV-Providers. Dies ist durch Schritt S4 symbolisiert. Die Nachricht enthält neben der Identifikation der IPTV-Settop-Box Informationen über das ausgewählte Programm und die ausgewählte Farbtaste oder direkt die zu wählende Telefonnummer.

Die IPTV-Middleware stellt eine Kommunikationsverbindung zu einem Rechner 18, einem Telefonie-Vermittlungsserver, her. An diesem Rechner 18 hat entweder der IPTV-Provider oder der Zuschauer einen Account. Hierdurch wird es ermöglicht, die Kosten für den Aufbau der Kommunikationsverbindung gegenüber dem Zuschauer abzurechnen. Die Übertragung der Daten von der IPTV-Middleware 14 an den Rechner 18 ist durch Schritt S5 gekennzeichnet.

Nach der Verbindung der IPTV-Middleware 14 mit dem Telefonie-Vermittlungsserver 18 stellt der Provider eine Kommunikationsverbindung, im Ausführungsbeispiel eine Telefonverbindung, zwischen dem Zuschauer (Kommunikationsendgerät 19) und dem Programmprovider (Kommunikationsgerät 13) her. Hierbei wird zunächst die Verbindung zwischen dem Rechner 18 und dem Kommunikationsgerät 19 und hernach die Verbindung zwischen dem Rechner 18 und dem Kommunikationsgerät 13 (Schritt S7) hergestellt.

Das beschriebene Verfahren ermöglicht es, dass bei Fernsehen über das Internet ein Zuschauer nicht mehr eine in einem Fernsehbild angezeigte Telefonnummer über ein Kommunikationsendgerät, wie z.B. ein Telefon, zu wählen braucht. Vielmehr ermöglicht das Verfahren dem Zuschauer, die Telefonnummer per Tastendruck auf der Fernbedienung der IPTV-Settop-Box zu wählen. Dies bietet mehrere Vorteile: Der Zuschauer muss nicht mehr die Telefonnummer eintippen und ist daher eher animiert, eine in das Fernsehbild eingeblendete Telefonnummer zu kontaktieren. Der IPTV-Provider kann den Service im Rahmen einer Vergebührung (micro payment) verrechnen oder auf die Freischaltung des Service vergebühren. Der Provider des Fernsehprogramms wird aufgrund der einfacheren Möglichkeit und der niedrigeren Hemmschwelle eine in einem Fernsehprogramm eingeblendete Telefonnummer zu wählen mit diesen eingeblendeten Nummern größere Umsätze erzielen.

Im Rahmen der weiteren Beschreibung wird weiterhin auf das in Fig. 2 beschriebene Verfahren Bezug genommen. Für das folgende Ausführungsbeispiel werden folgende Annahmen zusätzlich getroffen:
- Bei dem Fernsehprogramm soll es sich um eine Live-Sendung handeln.
- Auf der IPTV-Settop-Box 16 des Zuschauers 17 ist eine Kommunikationsvorrichtung (IP Telefonie client) installiert, welcher direkt eine Kommunikationsverbindung zwischen dem Provider der Fernsehsendung und dem Zuschauer herstellen kann.

In einem ersten Schritt sendet der Provider des Fernsehprogramms die Informationen über die einzublendenden Telefonnummern und die zu wählenden Tasten an den IPTV-Provider über eine Content-Management-Schnittstelle. Die Informationen können beispielsweise in Form einer XML-Nachricht versendet werden, die beispielsweise das nachfolgend dargestellte Format haben kann. XML steht für Extendable Markup Language.

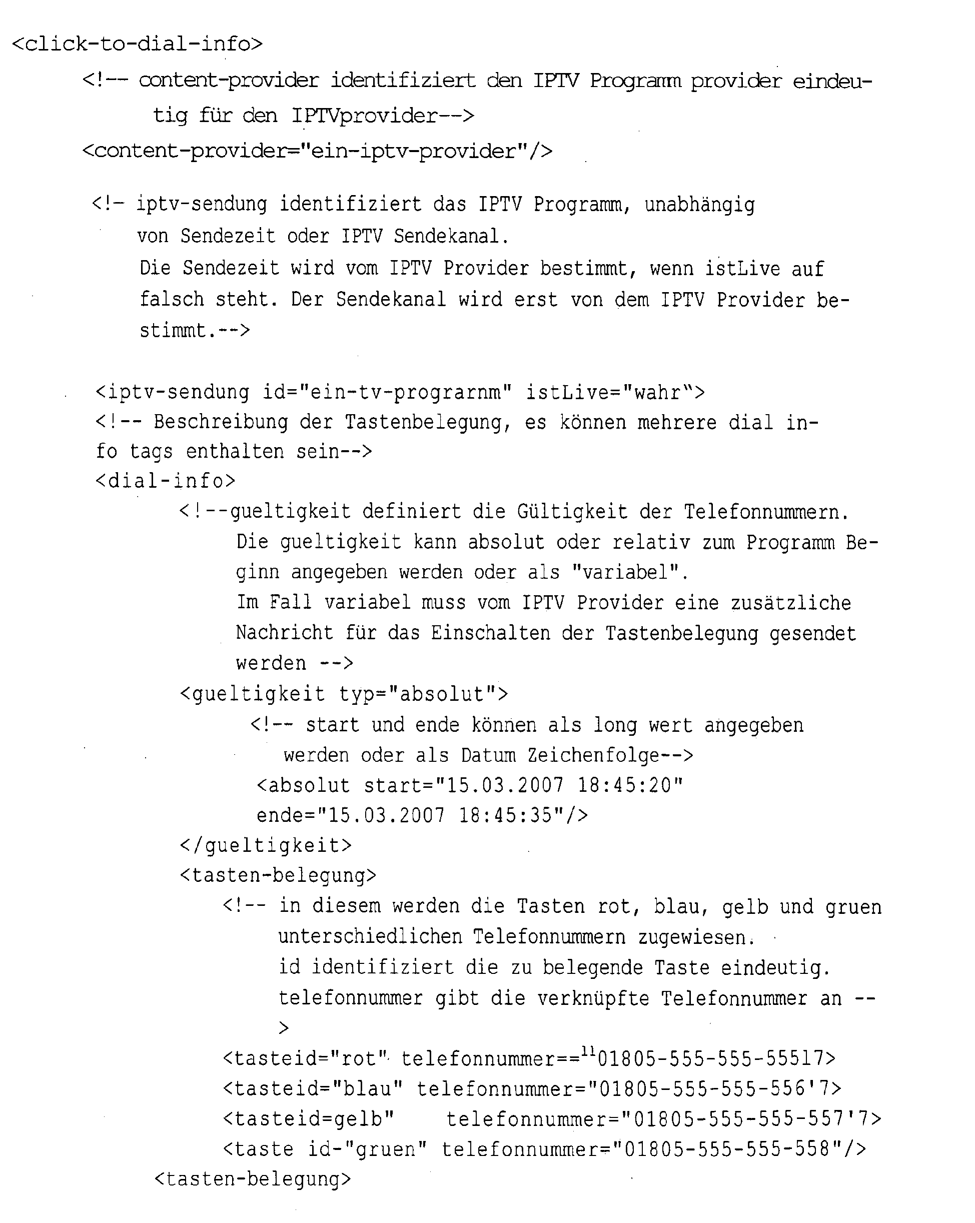

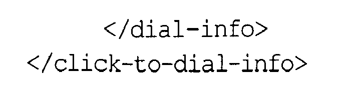

In einem zweiten Schritt werden die in der Nachricht enthaltenen Informationen per IP-Multicast an die IPTV-Settop-Boxen der Zuschauer übertragen. IP-Multicast ist ein IP-Protokoll zur simultanen Bandbreiten schonenden Übertragung von Daten an eine Vielzahl von Empfängern (Zuschauern). Hierbei ist es üblich, dass eine IPTV-Middleware einen Multicast-Übertragungskanal für die Übertragung von Programminformationen bereitstellt. Die IPTV-Settop-Box speichert die Informationen. Hat der Zuschauer zu den angegebenen Zeitpunkten den angegebenen IPTV-Kanal ausgewählt, wird die Tastenbelegung aktiviert, d.h. "scharf" geschaltet. Bei Auswahl eines anderen IPTV-Kanals wird die Tastenbelegung wieder zurückgenommen.

In einem dritten Schritt hat der Zuschauer zu der angegebenen Zeit den angegebenen Kanal ausgewählt und drückt eine der konfigurierten Tasten der Fernbedienung. Im Gegensatz zu der in Verbindung mit Fig. 2 beschriebenen Lösung ist im Ausführungsbeispiel eine Kommunikationsvorrichtung auf oder in der IPTV-Settop-Box selbst installiert. Diese kann in Form von Hardware oder Software ausgebildet sein. Mit dem Tastendruck steuert die IPTV-Settop-Box den IPTV-Telefonie-Client an, um eine Verbindung von dem IPTV-Telefonie-Client zu der angegebenen Telefonnummer aufzubauen. Es findet im Gegensatz zu der vorher skizzierten Lösung keine weitere Kommunikation zwischen der IPTV-Settop-Box und der IPTV-Middleware statt.

Damit wird in einem vierten Schritt eine Kommunikationsverbindung zwischen dem IP-Telefonie-Client der Settop-Box und der angegebenen Telefonnummer, d.h. dem der Telefonnummer zugeordneten Kommunikationsgerät, hergestellt, wobei eine entsprechende Vergebührung stattfindet.

## Patentansprüche

1. Datenverarbeitungsgerät (16), insbesondere Settop-Box, zum Anschluss an ein Empfangsgerät (15) und an ein Kommunikationsnetzwerk, wobei das Datenverarbeitungsgerät (16) dazu ausgebildet ist,
- von dem Kommunikationsnetzwerk ausgesendete Daten, umfassend Inhaltsdaten (2) sowie zumindest ein Identifikationsdatum (3), zu empfangen und zu verarbeiten und die verarbeiteten Daten an das Empfangsgerät (15) zur Ausgabe zu übertragen,
- einen von einer Eingabevorrichtung des Datenverarbeitungsgeräts (16) und/oder des Empfangsgeräts (15) ausgesendeten Code, der einem bestimmten Identifikationsdatum (3) der Identifikationsdaten (3) zugeordnet ist, zu empfangen und zu verarbeiten, und
- in Reaktion auf den Erhalt des Codes eine Kommunikationsverbindung zwischen dem Datenverarbeitungsgerät (16) bzw. einem Kommunikationsendgerät und einer Einrichtung des Kommunikationsnetzwerks herzustellen, welcher das bestimmte Identifikationsdatum (3) zugeordnet ist.

2. Datenverarbeitungsgerät (16) nach Anspruch 1, bei dem dieses weiter dazu ausgebildet ist, aus den von dem Kommunikationsnetzwerk ausgesendeten Daten das zumindest eine Identifikationsdatum (3) und jeweils eine einem Eingabemittel der Eingabevorrichtung entsprechende und einem Identifikationsdatum (3) zugeordnete Auswahlinformation zu ermitteln, wobei das Datenverarbeitungsgerät (16) aus den Auswahlinformationen einen jeweiligen den Identifikationsdaten (3) zugeordneten Code ermitteln kann.

3. Datenverarbeitungsgerät (16) nach Anspruch 2, bei dem das zumindest eine Identifikationsdatum (3) und die zugeordnete Auswahlinformation an das Empfangsgerät (15) zur Ausgabe übertragen werden.

4. Datenverarbeitungsgerät (16) nach Anspruch 2 oder 3, bei dem der Code dem Eingabemittel der Eingabevorrichtung zugeordnet ist und durch diese bei Betätigung des Eingabemittels ausgesendet wird.

5. Datenverarbeitungsgerät (16) nach einem der Ansprüche 2 bis 4, bei dem dieses das Identifikationsdatum (3) und den dem Identifikationsdatum (3) zugeordneten Code speichert.

6. Datenverarbeitungsgerät (16) nach einem der vorherigen Ansprüche, bei dem dieses eine Kommunikationsvorrichtung aufweist, mittels welcher direkt eine Kommunikationsverbindung mit der Einrichtung des Kommunikationsnetzwerks herstellbar ist.

7. Datenverarbeitungsgerät (16) nach einem der Ansprüche 1 bis 5, bei dem das Datenverarbeitungsgerät (16) zur Herstellung einer Verbindung mit der Einrichtung des Kommunikationsnetzwerks dazu ausgebildet ist, an ein Kommunikationsmittel des Kommunikationsnetzwerks eine Nachricht zu übertragen, welche umfasst:
- einen Kennzeichner des Datenverarbeitungsgeräts (16);
- eine Information über die an das Empfangsgerät (15) übertragenen Daten;
- eine Information über die Auswahlinformation oder das Identifikationsdatum (3), welches der Auswahlinformation zugeordnet ist,
so dass das Kommunikationsmittel des Kommunikationsnetzwerks eine Kommunikationsverbindung mit der Einrichtung des Kommunikationsnetzwerks herstellen kann.

8. Datenverarbeitungsgerät (16) nach einen der vorherigen Ansprüche, bei dem dieses zum Empfang von auf dem Internet Protokoll basierenden Daten ausgebildet ist.

9. Datenverarbeitungsgerät (16) nach einem der vorherigen Ansprüche, bei dem eine Kommunikationsverbindung zu der Einrichtung des Kommunikationsnetzwerks nur dann aufgebaut wird, wenn der Code empfangen wird, solange die von dem Kommunikationsnetzwerk ausgesendeten und von dem Datenverarbeitungsgerät (16) erhaltenen Daten, umfassend das zumindest eine Identifikationsdatum (3) und die jeweils zugeordnete Auswahlinformation, an das Empfangsgerät (15) übertragen werden.

10. Eingabevorrichtung, insbesondere Fernbedienung, zur Steuerung eines Datenverarbeitungsgeräts (16) nach einem der vorherigen Ansprüche, die zumindest ein Eingabemittel umfasst, wobei die Eingabevorrichtung dazu ausgebildet ist, eine Betätigung des zumindest einen Eingabemittels zu überwachen und in Reaktion auf die Betätigung eines der Eingabemittel einen dem betreffenden Eingabemittel zugeordneten eindeutigen Code auszusenden, wodurch der Aufbau einer Kommunikationsverbindung zu einer Einrichtung eines Kommunikationsnetzwerks veranlasst wird, welcher ein dem Code zugeordnetes Identifikationsdatum (3) zugeordnet ist.

11. Verfahren zum Betreiben eines Datenverarbeitungsgeräts (16), insbesondere einer Settop-Box, das an ein Kommunikationsnetzwerk und ein Empfangsgerät (15) angeschlossen ist, und das nach einem der Ansprüche 1 bis 9 ausgebildet ist, bei dem:
- von dem Kommunikationsnetzwerk ausgesendete Daten, umfassend Inhaltsdaten (2) sowie zumindest ein Identifikationsdatum (3), empfangen und verarbeitet werden;
- die verarbeiteten Daten an das Empfangsgerät (15) zur Ausgabe übertragen werden;
- wenn ein von einer Eingabevorrichtung des Datenverarbeitungsgeräts (16) und/oder des Empfangsgeräts (15) ausgesendeter Code, der einem bestimmten Identifikationsdatum (3) der Identifikationsdaten (3) zugeordnet ist, empfangen wird, der Code verarbeitet und in Reaktion auf den Erhalt des Codes eine Kommunikationsverbindung zwischen dem Datenverarbeitungsgerät (16) bzw. einem Kommunikationsendgerät und einer Einrichtung des Kommunikationsnetzwerks hergestellt wird, welchem das Identifikationsdatum (3) zugeordnet ist.

12. Verfahren nach Anspruch 11, bei dem durch das Datenverarbeitungsgerät (16) aus den von dem Kommunikationsnetzwerk ausgesendeten Daten das zumindest eine Identifikationsdatum (3) und jeweils eine einem Eingabemittel der Eingabevorrichtung entsprechende und einem Identifikationsdatum (3) zugeordnete Auswahlinformation ermittelt werden.

13. Verfahren nach Anspruch 12, bei dem das Datenverarbeitungsgerät (16) aus den Auswahlinformationen einen jeweiligen den Identifikationsdaten (3) zugeordneten Code ermittelt.

14. Verfahren nach Anspruch 12 oder 13, bei dem das zumindest eine Identifikationsdatum (3) und die jeweils zugeordneten Auswahlinformationen in dem Datenverarbeitungsgerät (16) gespeichert werden.

15. Verfahren nach einem der Ansprüche 11 bis 14, bei dem das Datenverarbeitungsgerät (16) direkt eine Kommunikationsverbindung mit der Einrichtung des Kommunikationsnetzwerks herstellt.

16. Verfahren nach einem der Ansprüche 11 bis 14, bei dem das Datenverarbeitungsgerät (16) zur Herstellung einer Verbindung mit der Einrichtung des Kommunikationsnetzwerks eine Nachricht an ein Kommunikationsmittel des Kommunikationsnetzwerks überträgt, welche umfasst:
- einen Kennzeichner des Datenverarbeitungsgeräts (16);
- eine Information über die an das Empfangsgerät (15) übertragenen Daten;
- eine Information über die Auswahlinformation oder das Identifikationsdatum (3), welches der Auswahlinformation zugeordnet ist,
so dass das Kommunikationsmittel des Kommunikationsnetzwerks eine Kommunikationsverbindung mit der Einrichtung des Kommunikationsnetzwerks herstellen kann.

17. Verfahren nach einem der Ansprüche 11 bis 16, bei dem die Daten von dem Kommunikationsnetzwerk an das Datenverarbeitungsgerät (16) gemäß dem Internet Protokoll übertragen werden.

18. Verfahren zum Bereitstellen eines Interaktionskanals in einer Fernsehsendung, mit den Schritten:
- Bereitstellen von Daten für die Ausgabe auf einem Empfangsgerät (15), wobei die Daten neben Inhaltsdaten (2) zumindest ein Identifikationsdatum (3) und eine jeweilige, dem zumindest einen Identifikationsdatum (3) zugeordnete Auswahlinformation umfassen;
- Übertragen der Daten an ein Datenverarbeitungsgerät (16) zur Verarbeitung und Weiterleitung an das Empfangsgerät (15), welches an das Datenverarbeitungsgerät (16) angeschlossen ist;
- Übertragen des zumindest einen Identifikationsdatums (3) und der jeweiligen, dem Identifikationsdatum (3) zugeordneten Auswahlinformation an ein Kommunikationsmittel eines Kommunikationsnetzwerks;
- Herstellen einer Kommunikationsverbindung, wenn das Kommunikationsmittel eine von dem Datenverarbeitungsgerät (16) ausgesendete Nachricht empfängt, aus welcher sich ein bestimmtes der Identifikationsdaten (3) ermitteln lässt, wobei die Kommunikationsverbindung zwischen einer Einrichtung, welcher das bestimmte Identifikationsdatum (3) zugeordnet ist, und einem Kommunikationsendgerät eines Zuschauers hergestellt wird.
